(19) Europäisches Patentamt
European Patent Office
Office européen des brevets

(11) EP 0 543 357 B1

(12) EUROPÄISCHE PATENTSCHRIFT

(45) Veröffentlichungstag und Bekanntmachung des Hinweises auf die Patenterteilung:
**28.01.1998 Patentblatt 1998/05**

(51) Int Cl.[6]: **C08G 18/77**, C08G 18/58, C08G 18/80, C09D 5/44

(21) Anmeldenummer: **92119672.1**

(22) Anmeldetag: **19.11.1992**

(54) **Kunstharz**

Synthetic resin

Résine synthétique

(84) Benannte Vertragsstaaten:
**AT BE CH DE ES FR GB IT LI NL SE**

(30) Priorität: **22.11.1991 DE 4138384**

(43) Veröffentlichungstag der Anmeldung:
**26.05.1993 Patentblatt 1993/21**

(73) Patentinhaber: **BASF Coatings Aktiengesellschaft
48165 Münster (DE)**

(72) Erfinder:
- **Huemke, Klaus, Dr.
W-6701 Friedelsheim (DE)**
- **Faul, Dieter, Dr.
W-6702 Bad Duerkheim (DE)**
- **Hoffmann, Gerhard, Dr.
W-6701 Otterstadt (DE)**

(74) Vertreter: **Kluth, Bernhard et al
BASF Coatings AG,
Patente, Lizenzen, Dokumentation,
Postfach 6123
48136 Münster (DE)**

(56) Entgegenhaltungen:
**US-A- 3 370 077**
**US-A- 3 631 199**
**US-A- 4 148 819**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 543 357 B1

## Beschreibung

Die vorliegende Erfindung betrifft wäßrige Elektrotauchlackierbäder enthaltend

A) ein vernetzbares Bindemittel aus der Gruppe der Polymerisations-, Polyadditions- oder Polykondensationsprodukte mit reaktionsfähigen Zentren in Form von Hydroxy-, Thio-, primären oder sekundären Aminogruppen und

B) einen Vernetzer auf der Basis mindestens eines Polyoxyalkylenpolyisocyanates und

C) einen von (B) verschiedenen Vernetzer, der auch mit dem Bindemittel (A) verknüpft sein kann, auf der Basis

$\gamma_1$) eines von (B) verschiedenen mehrwertigen Isocyanates oder
$\gamma_2$) eines Transamidierungsvernetzers oder
$\gamma_3$) eines Transesterifizierungsvernetzers oder
$\gamma_4$) einer Mannichbase oder

einer Mischung zweier oder mehrerer Vernetzer ($\gamma_1$) bis ( $\gamma_4$).

Die Erfindung betrifft auch einen mittels kathodischer Elektrotauchlackierung beschichteten Gegenstand, der unter Verwendung der erfindungsgemäßen Elektrotauchlackierbäder erhältlich ist.

Um Metallteile zu beschichten, wird, insbesondere in der Automobilindustrie, das kathodische Elektrotauchlakkierverfahren immer häufiger angewandt. Dabei werden kathodisch abscheidbare Kunstharze benötigt, die einen guten Korrosionsschutz bieten und gleichzeitig schlagfest sind, damit z.B. Automobillacke durch Steinschlag, etwa aus Splitt oder Splitt/Salz-Mischungen der Straßenstreuung im Winter nicht beschädigt werden.

In der US-A-3,631,199 werden Polyoxyalkylendiisocyanate beschrieben und erwähnt, daß diese Polyoxyalkylendiisocyanate zur Kettenverlängerung und Vernetzung von Verbindungen mit aktiven Wasserstoffatomen verwendet werden können.

In der EP-B1-70 550 werden wäßrige Dispersionen für die kathodische Tauchlackierung beschrieben, in denen Kunstharze, die durch Umsetzung von Epoxidharzen auf der Basis von Bisphenol A mit Polyoxyalkylenpolyaminen erhältlich sind, als Bindemittel verwendet werden.

Die bisher bekannten Systeme erfüllen jedoch noch nicht alle Anforderungen bezüglich hervorragender Steinschlagfestigkeit bei gleichzeitigem guten Korrosionsschutz und unter Erhalt aller sonstigen guten anwendungstechnischen Eigenschaften.

Aufgabe der vorliegenden Erfindung war es daher, wäßrige Elektrotauchlackierbäder zur Verfügung zu stellen, mit denen Lackschichten herstellbar sind, die sich sowohl durch hohe Steinschlagfestigkeit als auch sehr gute Korrosionsfestigkeit auszeichnen sollten.

### Komponente A

Erfindungsgemäß enthalten die wäßrigen Elektrotauchlackierbäder ein vernetzbares Bindemittel. Der Bindemittelgehalt, bezogen auf die Komponenten A, B, und C, liegt vorzugsweise zwischen 50 bis 95 Gew.%.

Die Grundbausteine der als Komponente A in Betracht kommenden Bindemittel sind Polymerisations-, Polykondensations- oder Polyadditionsprodukte, die reaktionsfähige Zentren in Form von Hydroxy-, Thio-, primären oder sekundären Aminogruppen enthalten. über diese reaktiven Zentren können die Bindemittel beispielsweise durch Protonieren wasserdispergierbar oder durch Reaktion mit den Komponenten (B) und (C) vernetzt werden. Die mittleren Molekulargewichte $\overline{M}_w$ der Grundbausteine liegen im allgemeinen zwischen 200 und 5000, vorzugsweise zwischen 250 und 3000, wobei der Gehalt an reaktiven Zentren im allgemeinen von 1,5 bis 3,0, vorzugsweise von 1,8 bis 2,5 Äquivalenten pro Molekül liegt. Beispiele geeigneter Materialien sind Polyester, Alkydharze, Polyether, Polyacrylate, Polyurethane und Polyepoxide. Diese Grundbausteine können zusätzlich mit Aminen, Alkoholen, Thiolen oder Mischungen dieser Verbindungen umgesetzt werden.

Geeignete Polyester sind solche aus aliphatischen und/oder aromatischen Dicarbonsäuren mit 4 bis 10 Kohlenstoffatomen und mehrwertigen Alkoholen bzw. Thiolen. Als Beispiele für die Dicarbonsäuren sind zu nennen Bernsteinsäure, Glutarsäure, Adipinsäure, Pimelinsäure, Korksäure, Azelainsäure, Sebacinsäure, Cyclohexandicarbonsäure, Phthalsäure, Isophthalsaure oder Terephthalsäure bzw. Derivate dieser Dicarbonsäuren. Zu den mehrwertigen Alkoholen zählen aliphatische Diole, wie Ethylenglykol, Diethylenglykol, Triethylenglykol, Polyethylenglykol, Propandiol, Butandiol, Hexandiol, Neopentylglykol und Hydroxypivalinsäureneopentylglykolester und höherwertige Alkohole wie Trimethylolpropan, Glycerin, Erythrit, Pentaerythrit, Trimethylolbenzol oder Trishydroxyethylisocyanurat.

Geeignete Alkydharze sind ähnlich aufgebaut, nur enthalten sie zusätzlich eine oder mehrere Monocarbonsäuren, z.B. Fettsäuren. Auch Alkydharze, welche Glycidylester von verzweigten Carbonsäuren enthalten, können verwendet

werden.

Aliphatische oder araliphatische Polyether mit reaktionsfähigen Zentren sind ebenfalls einsetzbar. Zweckmäßigerweise können sie durch Umsetzen von zwei- und/oder mehrwertigen Alkoholen mit Ethylen- und/oder Propylenoxid erhalten werden.

Zu der Gruppe der Polymerisationsprodukte gehören Polyacrylate, die durch Copolymerisation von 5 bis 50 Gew.-% vorzugsweise 10 bis 30 Gew.-%, eines Hydroxy- oder Aminogruppen enthaltenden Monomeren bzw. einer Mischung verschiedener solcher Monomerer mit 50 bis 95 Gew.-%, bevorzugt 70 bis 90 Gew.-% an anderen ungesättigten Monomeren hergestellt werden können. Zu der erstgenannten Gruppe von Monomeren zählen z.B. Isopropylaminopropylmethacrylamid und Hydroxy-($C_2$-$C_4$)-alkylester einer $\alpha,\beta$-ethylenisch ungesättigten Carbonsäure, beispielsweise 2-Hydroxyethyl- und Hydroxypropylmethacrylat, sowie Butandiol-monomethacrylat. Zu der letztgenannten Gruppe von Monomeren gehören beispielsweise Vinylaromaten wie Styrol und Vinyltoluol, Vinylester von Carbonsäuren mit 2 bis 18 Kohlenstoffatomen z.B. Vinylacetat und Vinylpropionat, Vinylether von Monoalkoholen mit 1 bis 18 Kohlenstoffen wie Vinylmethylether und Vinylisobutylether, Ester der Acrylsäure und der Methacrylsäure mit $C_1$-$C_{12}$-Monoalkoholen, entsprechende Maleinsäure, Fumarsäure- und Itaconsäurediester, Acrylsäureamid, Acrylsäurenitril und die entsprechenden Methacrylsäurederivate sowie Gemische dieser Monomeren. Weiterhin ist es möglich, epoxidgruppentragende Acrylate wie Glycidylmethacrylat zu polymerisieren und die Polymerisate durch Umsetzen mit Aminen zu derivatisieren.

Als Polykondensationsprodukte sind z.B. Kondensationsprodukte aus Polycarbonsäuren mit Polyaminen einsetzbar. Umsetzungsprodukte aus dimerisierten oder trimerisierten Fettsäuren und Polyaminen wie Ethylendiamin, 1,2- und 1,3-Diaminopropan, Diethylentriamin, Dipropylentriamin, Triethylentetraamin sind geeignet, sofern sie die erforderlichen reaktionsfähigen Zentren enthalten.

Polyurethane aus aliphatischen und/oder aromatischen Diisocyanaten und aliphatischen Diolen haben sich ebenfalls als geeignet erwiesen, sofern sie die erforderlichen reaktionsfähigen Zentren aufweisen. Als Beispiele für die Diisocyanate seien genannt Tetramethylendiisocyanat, Hexamethylendiisocyanat, Isophorondiisocyanat, Diphenylmethandiisocyanat, Toluylendiisodicyanat, Naphtylendiisocyanat, 4,4'-Diphenyletherdiisocyanat. Geeignet Diole sind z. B. Ethylenglycol, Diethylenglycol, Triethylenglycol, Polyethylenglycol, Propandiol, Butandiol, Hexandiol, Neopentylglycol oder Hydroxypivalinsäureneopentylglycolester. Es kommen aber auch höherwertige Alkohole in Betracht wie Trimethylolpropan, Glycerin, Pentaerythrit, Trimethylolbenzol und Trishydroxyethylisocyanurat.

Bevorzugte Bindemittel sind solche, deren Grundstruktur auf Epoxidharzen basiert.

Es können Epoxidharze eingesetzt werden, die Umsetzungsprodukte mehrwertiger Phenole mit Epihalogenhydrin sind, wobei das Molekulargewicht durch das Verhältnis Phenol zu Epihalogenhydrin gesteuert werden kann. Beispiele für derartige mehrwertige Phenole sind Resorcin, Hydrochinon, 2,2-Di-(4-hydroxyphenyl)propan (Bisphenol A), p,p'-Dihydroxybenzophenon, p,p'-Dihydroxydiphenyl, 1,1-Di-(4-hydroxyphenyl)ethan, Bis-(2-hydroxynaphthyl)-methan, 1,5-Dihydroxynaphthylen und Novolake. Bisphenol A wird bevorzugt verwendet. Das bevorzugte Epihalogenhydrin ist Epichlorhydrin.

Neben Epoxidharzen aus mehrwertigen Phenolen und Epihalogenhydrin können Polyglycidylether mehrwertiger Alkohole wie Ethylenglykol, Diethylenglykol, Triethylenglykol, 1,2-Propylenglykol, 1,3-Propandiol, 1,4-Butandiol, 1,5-Pentandiol, 1,6-Hexandiol, 1,2,6-Hexantriol, Glycerin oder Bis-(4-hydroxycyclohexyl)-2,2-propan verwendet werden.

Ganz besonders bevorzugt ist es Epoxidharze, die Diglycidylether von Bisphenol A sind, mit mehrwertigen Phenolen, insbesondere Bisphenol A, zu modifizieren.

Erfindungsgemäß können die Epoxidharze mit einem Amin oder Mischungen verschiedener Amine umgesetzt werden. Zu den Aminen zählen Alkylamine, Alkylalkanolamine, Polyoxyalkylenpolyamine und mehrwertige Polyolefinamine. Geeignete Produkte können beispielsweise durch die Reaktion mit einem Überschuß an primären Alkyldiaminen erhalten werden, deren Alkylrest 2 bis 20 Kohlenstoffatome haben kann. Als primäre Alkyldiamine kommen vor allem Ethylendiamin, 1,2- und 1,3-Diaminopropan, 1,4-Diaminobutan, Neopentandiamin und Hexamethylendiamin in Betracht. Geeignete sekundäre Dialkylmonoamine sind solche, deren Alkylreste 1 bis 20 Kohlenstoffatome haben, wobei Dimethylamin und Diethylamin bevorzugt werden. Ebenfalls geeignet sind Alkylalkanolamine, deren Alkyl- und Alkanolreste jeweils 1 bis 20 Kohlenstoffatome haben können, wobei die Kettenlänge der Reste entweder gleich oder verschieden voneinander sein kann. Als Alkylalkanolamine sind z.B. zu nennen Ethylethanolamin, Methylisopropanolamin und besonders Methylethanolamin. Die Polyoxyalkylenpolyamine, die eingesetzt werden können, sind beispielsweise Polyoxyethylenpolyamin, Polyoxypropylenpolyamin und Polyoxybutylenpolyamin. Zu der Gruppe der zählen aminterminierte Butadien-Acrylnitril-Copolymere.

Eine weitere Möglichkeit die Epoxidharze zu modifizieren besteht darin, sie mit sekundären Aminen umzusetzen, die geblockte primäre Aminogruppen enthalten. Hierbei reagieren nur die sekundären Aminogruppen mit dem Epoxidharz, während die geblockten primären Aminogruppen nach der Reaktion z.B. durch Wasserzugabe freigesetzt werden können. Die Alkylreste dieser Verbindungen haben im allgemeinen 1 bis 20 Kohlenstoffatome. Beispiele solcher Amine sind das Diketimin von Diethylentriamin, das Ketimin von Aminoethylethanolamin, das Ketimin von N-Methyl-ethylendiamin und das Ketimin von N-Aminoethylpiperazin. Bevorzugtes Ketimin ist Methylisobutylketimin.

Falls gewünscht, können die mit Aminen modifizierten Epoxidharze mit Dicarbonsäuren kettenverlängert werden, z.B. mit Sebacinsäure oder dimerer Fettsäure. Eine Mitverwendung von Monocarbonsäuren wie Stearinsäure oder Fettsäuren ist ebenfalls möglich.

Erfindungsgemäß werden als Bindemittel Diglycidylether auf der Basis eines mehrwertigen Phenols, insbesondere auf der Basis von Bisphenol A und Epichlorhydrin bevorzugt. Die mittleren Molekulargewichte $\overline{M}_w$ dieser Verbindungen liegen in der Regel zwischen 200 und 5000 und sie enthalten im Mittel etwa 1,5 bis 3,0 Epoxidgruppen pro Molekül, was Epoxidequivalentgewichte von etwa 50 bis 1000 entspricht. Bevorzugt werden Epoxidequivalentgewichte von 150 bis 1500, insbesondere von etwa 400 bis 500. Es hat sich als besonders günstig erwiesen, diese Epoxidharze mit Aminen zu modifizieren, wobei Dimethylaminopropylamin und Methylethanolamin besonders geeignet sind.

Komponente B

Als Komponente B enthalten die wäßrigen Elektrotauchlackier bäder, bezogen auf die Komponenten A, B, und C, in der Regel von 5 bis 50 Gew.-%, insbesondere von 10 bis 30 Gew.-%, eines Vernetzers auf der Basis eines Polyoxyalkylenpolyisocyanates.

Um vorzeitige Vernetzung zu vermeiden, werden Polyoxyalkylenpolyisocyanate bevorzugt, die einen möglichst hohen Anteil an Polyoxyalkylendiisocyanat enthalten. Dementprechend werden Polyoxyalkylenpolyisocyanate der allgemeinen Formel I bevorzugt:

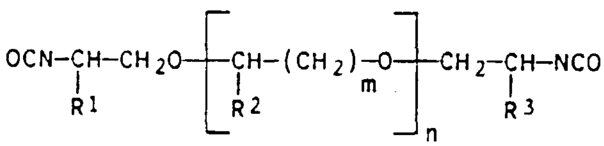 ,

wobei $R^1$ bis $R^3$ gleich oder verschieden voneinander sein können und für Reste aus der Gruppe Wasserstoff und $C_1$-$C_6$-Alkyl stehen. Der Parameter m liegt zwischen 1 und 10, vorzugsweise zwischen 1 und 3. Die Kettenlänge n liegt zwischen 1 und 50, bevorzugt 1 bis 30. Meistens sind Polyoxyalkylenpolyisocyante mit mittleren Molekulargewichten $\overline{M}_w$ zwischen 450 und 2500 besonders erwünscht, jedoch können auch solche mit mittleren Molekulargewichten zwischen 400 und 3000 geeignet sein. Polyoxyalkylenpolyisocyanate mit $\overline{M}_w$ außerhalb des Bereichs von 200 bis 3800 bringen in der Regel keine Vorteile. Besonders bevorzugte Polyoxyalkylenpolyisocyanate sind Polyoxyethylenpolyisocyanat, Polyoxypropylenpolyisocyanat und Polyoxybutylenpolyisocyanat.

Die Polyoxyalkylenpolyisocyanate können beispielsweise aus den entsprechenden Aminen durch Umsetzen mit Phosgen nach literaturbekannten Methoden hergestellt werden (siehe z.B. Houben-Weyl: Methoden der Organischen Chemie; H. Hagemann Herausg. ; Bd E4, Seite 741 ff, Georg-Thieme-Verlag, Stuttgart, 1983).

Die Isocyanatgruppen der Vernetzerkomponente (B) können erfindungsgemäß z.B. mit Ketoximen und/oder Polyolen, unter denen sowohl mehrwertige aliphatische Alkohole als auch aromatische Polyole zu verstehen sind, verkappt werden.

Dabei werden die Polyoxyalkylenpolyisocyanate im allgemeinen mit soviel Ketoxim umgesetzt, daß das Verhältnis der NCO-Equivalente zu den N-OH-Equivalenten von 3 bis 1,5 zu 1, bevorzugt von 2,5 bis 1,5 zu 1. liegt. Die verbleibenden Isocyanatgruppen können mit Polyolen verkappt und/oder mit sekundären Aminen und/oder Alkanolaminen umgesetzt werden.

Bei der Umsetzung der Polyoxyalkylenpolyisocyanate mit Polyolen werden die Mengen vorzugsweise so gewählt, daß das Verhältnis der NCO-Äquivalente zu den OH-Äquivalenten im allgemeinen von 1.1 bis 1.8 zu 1, bevorzugt zwischen 1.2 bis 1.7 zu 1 liegt. Äquivalentverhältnisse kleiner als 1.1:1 führen in der Regel dazu, daß die Verbindungen gelieren und somit zu niedrige Viskositäten aufweisen. Bei NCO-überschüssen größer als 1.8:1 entstehen Moleküle, die für die meisten Anwendungen zu geringe Molekulargewichte aufweisen. Die verbleibenden Isocyanatgruppen werden in einem zweiten Reaktionsschritt mit sekundären Aminen und/oder mit Alkanolaminen umgesetzt.

Ferner ist es möglich, die Polyoxyalkylenpolyisocyanate derart zu verkappen, daß ein Vernetzer gebildet wird, der bei unterschiedlichen Temperaturen wirkt. So können die Isocyanatgruppen z.B. im ersten Reaktionsschritt teilweise mit einem Alkohol wie Dimethylaminopropanol und Ethanol und in einem zweiten Reaktionsschritt mit einem Polyol, welches phenolische Endgruppen aufweist, verkappt werden. Diese phenolischen Endgruppen lassen sich anschließend mit Formaldehyd und einem sekundären Amin umsetzen, so daß ein Vernetzer mit Isocyanat- (höhere Temperatur) und Transaminierungsfunktion (tiefere Temperatur) erhalten werden kann.

Geeignete Ketoxime sind Dialkylketoxime, deren Alkylreste gleich oder verschieden voneinander sein können und 1 bis 6 Kohlenstoffatome haben, wobei die Alkylreste linear, verzweigt oder cyclisch sein können. Als Beispiele sind

zu nennen Dimethylketoxim, Methylethylketoxim, Diethylketoxim, Methylpropylketoxim, Dipropylketoxim, Methylbutylketoxim, Dibutylketoxim, Methylpentylketoxim und Methylhexylketoxim. Besonders bevorzugt wird Methylisobutylketoxim verwendet.

Zu den Polyolen, die als Verkappungsmittel eingesetzt werden können, zählen aliphatische Diole wie Diethylenglykol, 1,4-Butandiol, 1,5-Pentandiol, Polyethylenglykol und Polypropylenglykol. Vorzugsweise verwendet man aromatische Polyole, deren mittlere Molekulargewichte zwischen 200 bis 5000, insbesondere 200 und 2000 liegen und die im Mittel mindestens 2 Hydroxygruppen pro Molekül tragen. Umsetzungsprodukte aus Bisphenol A mit Epoxidharzen, wobei Epoxidharze auf der Basis von Bisphenol A und Epihalohydrin bevorzugt sind, haben sich als besonders geeignet erwiesen.

Komponente C

Der als Komponente (C) im allgemeinen in 5 bis 50, vorzugsweise 10 bis 30 Gew.%, bezogen auf die Komponente A, B und C, im Elektrotauchlackbad erfindungsgemäß enthaltene Vernetzer kann ein von Vernetzer (B) verschiedener blockierter Isocyanatvernetzer, ein Transesterifizierungs-, Transamidierungs- oder Transaminierungsvernetzer sein. Es können aber auch Mischungen verschiedener Vernetzer verwendet werden. Vernetzer (C) kann separater Bestandteil des Kunstharzes sein. Die Vernetzermoleküle können aber auch mit dem Bindemittel (A) verknüpft werden. Erst bei Bedarf erfolgt durch Einstellen geeigneter Bedingungen die vernetzung dieser sogenannten selbstvernetzenden Bindemittel.

Als blockierte Isocyanatvernetzer kommen z.B. Toluoldiisocyanat, 4,4'-Diphenylmethandiisocyanat, Isophorondiisocyanat, trimerisiertes Hexamethylendiisocyanat und Triphenylmethantriisocyanat in Betracht. Darunter werden Toluylendiisocyanat, 4,4'-Diphenylmethandiisocyanat und Isophorondiisocyanat besonders bevorzugt. Diese können beispielsweise mit den obengenannten (siehe Komponente (B)) Polyolen verkappt werden.

Verbindungen, die Transamidierungsvernetzer bilden, sind Verbindungen, vorzugsweise Polyesterharze, die freie Carboxylgruppen enthalten, an denen Carbalkoxymethylgruppen angelagert werden können. Die Carbalkoxymethylester reagieren mit freien primären und/oder sekundären Aminogruppen der Bindemittel unter Amidbildung.

Bindemittel, die als reaktionsfähige Zentren Hydroxylgruppen haben, können z.B. durch Transesterifizierungsvernetzer ausgehärtet werden. Diese vernetzer können beispielsweise dadurch hergestellt werden, daß Epoxidharze auf der Basis von Bisphenol A und Epihalohydrin in einem ersten Reaktionsschritt mit einer Dicarbonsäure umgesetzt werden. In einem zweiten Reaktionsschritt lassen sich diese Polyepoxid-Dicarbonsäureaddukte z.B. mit Glykolsäureestern z.B. Glycolsäuremethylester oder mit Alkylenoxiden wie Ethylenoxid, Propylenoxid oder Glycidylestern verzweigter aliphatischer Carbonsäuren, insbesondere Versaticsäureglycidylester umsetzen.

Mannich-Basen, die Umsetzungsprodukte aus Phenolen, Formaldehyd und sekundären Aminen sind, können ebenfalls als Vernetzerkomponente (C) verwendet werden. Zur Herstellung dieser Transaminierungsvernetzer werden beispielsweise epoxidgruppen-tragende Verbindungen wie Polyoxypropylendiglcidylether mit mehrwertigen Phenolen wie Bisphenol A umgesetzt und anschließend mit Dialkylaminen wie Dimethylamin, Diethylamin, Piperidin und mit Formaldehyd oder Verbindungen, die Formaldehyd liefern umgesetzt. Durch entsprechende Reaktionen können in die obengenannten Vernetzer zusätzliche Hydroxy-, Thiol- und/oder Amingruppen eingeführt werden.

Komponente D

Gewünschtenfalls können den Elektrotauchlackierbädern Pigmentzubereitungen zugegeben werden. So können die Eletrotauchlackierbäder vorzugsweise von 0 bis 30 Gew.-%, bezogen auf die Komponenten A, B und C, einer Pigmentzubereitung aus einem oder mehreren Pigmenten und einem Harz mit oberflächenaktiven Eigenschaften, ein sogenanntes Reibharz, enthalten.

Gebräuchliche Pigmente sind beispielsweise Eisen- und Bleioxide, Strontiumcarbonat, Ruß, Titandioxid, Talkum, Bariumsulfat, Cadmiumgelb, Cadmiumrot, Chromgelb, Phthalocyaninblau oder metallische Pigmente wie Aluminiumflocken.

Die Harze der Zubereitung sollten ein hohes Pigmenttragevermögen besitzen und mit dem jeweiligen Bindemittel des Kunstharzes verträglich sein. Bevorzugte Reibharze enthalten Diglcidylether auf der Basis von Bisphenol A und Epichlorhydrin, die mit einem Amin, besonders Hexamethylendiamin, modifiziert sind.

Komponente E

Zusätzlich können die erfindungsgemäßen Electrotauchlackierbäder einen oder mehrere Zusatzstoffe vorzugsweise wie verschiedene Füller, Antioxidantien, UV-Absorber verlauffördernde Mittel, Entschäumer, und andere Zusätze, z.B. Polyvinylether, enthalten. Diese Materialien machen in der Regel von 0 bis etwa 10 Gew.-%, insbesondere von 0,5 bis 5 Gew.-%, bezogen auf die Komponenten A, B und aus. Zu den bevorzugten Füllern gehören Titandioxid

und Bariumtitanoxide. Benzotriazole und Oxalsäureanilide haben sich als besonders gute UV-Absorber erwiesen. Butylglykol und Propylenglykolphenylether sind Beispiele für verlauffördernde Mittel. Entschäumend wirken beispielsweise Fettsäureester von Butin-1,4-diol oder auch naphthenische Mineralöle.

Die einzelnen Komponenten A, B oder C können jeweils in organischen Lösungsmitteln gelöst vorliegen. In Betracht kommende Lösungsmittel sind aromatische Kohlenwasserstoffe wie Toluol und Xylol, Glykole, Glykolether wie Diethylenglykolmethylether und Alkohole.

Durch die Zugabe von Säuren, bevorzugt Carbonsäuren wie Ameisen-, Essig- oder Milchsäuren, aber aucr anorganischer Säuren z.B. Phosphorsäure, können die Komponenten A, B und C in Wasser dispergiert und durch übliche Methoden auf Substrate aus Holz, Kunststoff oder Metall aufgebracht werden. Bevorzugt ist es jedoch, die Komponenten jeweils getrennt zu protonieren, getrennt in Wasser zu dispergieren, gewünschtenfalls das organische Lösungsmittel abzuziehen und anschließend die Einzeldispersionen zu mischen. Selbstverständlich ist es auch möglich, den einzelnen Komponenten jeweils die Zusatzstoffe zuzugeben und anschließend zu dispergieren.

Die erfindungsgemäßen Komponenten A, B und C eignen sich in Form ihrer wäßrigen Dispersionen für die Elektrotauchlackierung von elektrisch leitfähigen Gegenständen, wie Metallteilen. Für die kathodische Elektrotauchlackierung wird im allgemeinen ein Feststoffgehalt des Elektrotauchbades von 5 bis 40 Gew.-%, vorzugsweise von 10 bis 30 Gew.-% eingestellt. Die Abscheidung erfolgt üblicherweise bei Temperaturen zwischen 15 und 40°C, vorzugsweise zwischen 20 und 35°C während einer Zeit von 1 bis 5 min und bei pH-Werten zwischen 5 und 8, bevorzugt um den Neutralpunkt, bei Spannungen zwischen 50 und 500 v, vorzugsweise von 150 bis 450 V. Der zu beschichtende elektrisch leitfähige Gegenstand wird dabei als Kathode geschaltet. Der abgeschiedene Film wird bei Temperaturen von etwa 100°C bis etwa 200°C ca. 10 bis ca. 30 min gehärtet.

Die unter Verwendung der erfindungsgemäßen Elektrotauchlackierbäder erhältlichen überzüge weisen eine sehr gute Steinschlagfestigkeit bei gleichzeitig sehr gutem Korrosionsschutz auf. Außerdem sind sie, da ihre Einzelkomponenten getrennt dispergiert sind, über lange Zeit lagerstabil.

Beispiele

Abkürzungen

| | |
|---|---|
| 1) BPA: | Bisphenol A (p,p'-Dihydroxyphenylpropan) |
| 2) EEW: | Epoxidequivalentgewicht |
| 3) MiBK: | Methylisobutylketon |
| 4) NCO-EW: | Isocyanat-Equivalentgewicht |
| 5) VE: | voll entsalzt |

| Kunstharz 1 | | |
|---|---|---|
| Gew.-% | Equivalent | Bestandteil |
| (A): | Bindemittel 1 | |
| 50,4 | 3,74 | Diglycidylether auf Basis BPA[1], EEW[2] = 188 |
| 18,6 | 1,0 | Polycaprolactondiol, $\overline{M}_w \sim 540$ |
| 2,5 | - | Xylol |
| 13,7 | 1,74 | BPA |
| 0,3 | - | Benzyldimethylamin |
| 5,1 | 0,61 | Diethylentriamin - MiBK[3]-Diketimin, 75%ig in MiBK |
| 4,1 | 0,79 | Methylethanolamin |
| 5,3 | - | 2-Hexoxyethanol |
| (B): | Vernetzer B1 | |
| 53,9 | 2,4 | Polyoxybutylenpolyisocyanat, $\overline{M}_w \sim 480$, NCO-EW[4] = 240 |
| 10,8 | - | Diethylenglycoldimethylether |
| 21,4 | 2,0 | BPA |
| 6,4 | - | Toluol |
| 7,5 | 0,79 | Dipropylamin |

(fortgesetzt)

| Kunstharz 1 | | |
|---|---|---|
| Gew.-% | Equivalent | Bestandteil |
| (C): | Vernetzer C1 | |
| 36,1 | 2,0 | Toluylendiisocyanat |
| 24,5 | 1,0 | Butylglykol |
| 9,4 | 1,0 | Trimethylolpropan |
| 30,0 | - | MiBK |

| Kunstharz 2 | | |
|---|---|---|
| Gew.-% | Equivalent | Bestandteil |
| (A): | Bindemittel 2 (selbstvernetzend) | |
| 22,6 | 2,0 | Diglycidylether auf Basis BPA, EEW ~ 260 |
| 20,2 | - | Monoethylenglycolmonoethyletheracetat |
| 0,01 | - | Hydrochinon |
| 14,8 | 2,0 | Tetrahydrophthalsäure |
| 10,0 | 1,0 | Hydroxyethylmethacrylat |
| 15,1 | 4,0 | Toluylendiisocyanat |
| 7,7 | 2,0 | Dimethylethanolamin |
| 9,6 | - | Ethylacetat |
| (B): | Vernetzer B2 | |
| 10,2 | 8,0 | Diglycidylether auf Basis BPA, EEW = 188 |
| 14,8 | 19,2 | BPA |
| 0,01 | - | Triphenylphosphin |
| 14,1 | - | MiBK |
| 48,6 | 13,0 | Polyoxypropylenpolyisocyanat, $\overline{M}_w$ ~ 1100, NCO-EW ~ 550 |
| 10,7 | - | Diethylenglykoldimethylether |
| 1,6 | 2,7 | Dimethylethanolamin |

| Kunstharz 3 | | |
|---|---|---|
| Gew.-% | Equivalent | Bestandteil |
| (A): | Bindemittel 3 | |
| 5,9 | 9,3 | Hexamethylendiamin |
| 7,3 | 2,4 | Dimerfettsäure, $\overline{M}_w$ ~ 560 |
| 1,4 | 0,45 | Leinölfettsäure, $\overline{M}_w$ ~ 280 |
| 16,9 | - | Toluol |
| 52,6 | 10,0 | Diglycidylether auf Basis BPA, EEW ~ 485 |
| 12,7 | - | Isobutanol |
| 3,2 | 4,0 | Methylethanolamin |
| (B): | Vernetzer B3 | |
| 73,9 | 0,75 | Polyoxyethylenpolyisocyanat, $\overline{M}_w$ ~ 2000, NCO-EW ~ 2000, |
| 19,7 | - | Xylol |
| 4,5 | 0,39 | BPA |
| 1,9 | 0,15 | Diisobutylamin |

(fortgesetzt)

| Kunstharz 3 | | |
|---|---|---|
| Gew.-% | Equivalent | Bestandteil |
| (C): | Vernetzer C2 | |
| 47,9 | 1 | Hexamethylendiisocyanat (trimerisiert) |
| 20,0 | - | MiBK |
| 32,1 | 1 | Dibutylamin |

| Kunstharz 4 | | |
|---|---|---|
| Gew.-% | Equivalent | Bestandteil |
| (A): | Bindemittel 4 | |
| 51,2 | 10,15 | Diglycidylether auf Basis BPA, EEW = 188 |
| 17,8 | 2,7 | BPA-Ethylenoxid-Addukt (Molverhältnis 1:6), $\overline{M}_w \sim 492$ |
| 14,8 | 4,86 | BPA |
| 4,4 | - | MiBK |
| 0,2 | - | Benzyldimethylamin |
| 5,7 | 0,35 | Diethylentriamin-MiBK-Diketimin (75%ig in MiBK) |
| 5,0 | 1,54 | N-Methylethanolamin |
| 0,9 | - | Propylenglykolphenylether |
| (B): | Vernetzer B4 | |
| 72,4 | 45,0 | Polyoxybutylenpolyisocyanat, $\overline{M}_w \sim 600$, MiBK |
| 19,2 | - | MiBK |
| 13,5 | 15,1 | MiBK-Ketoxim |
| 4,8 | 20,0 | Trimethylolpropan |
| 0,1 | - | Dibutylzinnlaurat |
| (C): | Vernetzer C3 | |

| Kunstharz 5 | | |
|---|---|---|
| Gew.-% | Equivalent | Bestandteil |
| (A): | Bindemittel 4 | |
| (B): | Vernetzer B5 | |
| 73,3 | 2,0 | Polyoxypropylenpolyisocyanat, $\overline{M}_w \sim 2100$ |
| 12,0 | - | MiBK |
| 8,6 | 1,0 | Ethylhexanol in MiBK |
| 3,8 | 1,0 | BPA |
| 2,2 | - | Butylglykol |
| (C): | Vernetzer C3 | |

| Kunstharz 6 | | |
|---|---|---|
| Gew.-% | Equivalent | Bestandteil |
| (A): | Bindemittel 4 | |
| (B): | Vernetzer B6 | |
| 49,1 | 28,0 | Polyoxyethylenpolyisocyanat, $\overline{M}_w \sim 600$ |

(fortgesetzt)

| Kunstharz 6 | | |
|---|---|---|
| Gew.-% | Equivalent | Bestandteil |
| (A): | Bindemittel 4 | |
| (B): | Vernetzer B6 | |
| 7,0 | - | Toluol |
| 3,7 | 70,5 | Dimethylaminopropanol |
| 1,7 | 7,05 | Ethanol |
| 7,7 | 16,0 | Diglycidylether auf Basis BPA, EEW = 188 |
| 0,03 | - | Triphenylphosphin |
| 10,8 | - | MiBK |
| 3,7 | 12,0 | Dibutylamin |
| 1,8 | 12,0 | Paraformaldehyd |
| 11,3 | 19,2 | Bisphenol A |
| (C): | Vernetzer C3 | |

| Kunstharz 7 | | |
|---|---|---|
| Gew.-% | Equivalent | Bestandteil |
| (A): | Bindemittel 5 | |
| 5,5 | 2,95 | Diethylentriamin |
| 7,8 | 1,86 | Dimerfettsäure, $\overline{M}_w \sim 560$ |
| 1,5 | 1,48 | Leinölfettsäure, $\overline{M}_w \sim 280$ |
| 1,6 | - | Xylol |
| 40,8 | 6,0 | Diglycidylether auf Basis BPA, EEW ~ 188 |
| 11,2 | 6,75 | BPA |
| 2,7 | - | Propylenglykolphenylether |
| 0,015 | - | Triphenylphosphin |
| 23,1 | - | Isobutanol |
| 1,185 | - | Butylglykol |
| 3,7 | - | Methylethanolamin |
| (B): | Vernetzer B4 | |
| (C): | Vernetzer C3 | |

Kunstharz 8

(A): Bindemittel 5
(B): Vernetzer B5
(C): Vernetzer C3

Kunstharz 9

(A): Bindemittel 5
(B): Vernetzer B6
(C): Vernetzer C3

Vergleichskunstharz

(A): Bindemittel 4
(C): Vernetzer C2

Herstellung der Komponenten (A)

Bindemittel 1

Eine Mischung aus Diglycidylether, Polycaprolactondiol und Xylol in dem jeweils angegebenen Gewichtsverhältnis wurden unter Stickstoff auf 210°C erhitzt, wobei Wasser azeotrop abdestilliert wurde. Anschließend wurde auf 150°C abgekühlt und die entsprechenden Mengen an Bisphenol A und Benzyldimethylamin zugegeben. Nach 1 1/2 Stunden bei 150 - 170°C wurde die Reaktionsmischung auf 110°C abgekühlt und Diethylentrimain-Methylisobutyldiketimin, Methylethanolamin und 2-Hexoxyethanol in dem jeweils angegebenen Gewichtsverhältnis zugegeben. Es wurde etwa 1 Stunde bei 110°C nachgerührt.

Bindemittel 2

Entsprechend der angegebenen Gewichtsverhältnisse wurde der Diglycidylether in Monoethylenglykolmonoethyletheracetat gelöst. Nach der Zugabe der entsprechenden Menge Hydrochinon wurde der Halbester aus Tetrahydrophthalsäure und Ethyl-2-methylpropionat im angegebenen Gewichtsverhältnis zugesetzt und bei 105 - 110°C bis zu einer Säurezahl < 5 mg KOH/g abreagiert. Anschließend wurde auf 60°C abgekühlt und mit einer 70%igen Lösung von, mit Dimethylethanolamin halbverkappten, Toluyldiisocyanat in Ethylacetat versetzt. Bei 60 - 70°C wurde bis zu einem NCO-Wert von etwa Null abreagiert.

Bindemittel 3

a) Herstellung des Amin-Vorproduktes

246 g Hexamethylendiamin, 307 g Dimerfettsäure, 59 g Leinölfettsäure und 31 g Toluol wurden auf 190°C erhitzt und das entstandene Reaktionswasser (57 g) azeotrop abdestilliert. Anschließend wurde mit 73 g Toluol verdünnt und weitere 4,1 g Hexamethylendiamin zugesetzt. Die Aminzahl des Amin-Vorproduktes betrug 249 mg/g.

b) Herstellung des Bindemittels

In einem zweiten Rührgefäß wurden 3061 g des Diglycidylethers auf der Basis von Bisphenol A (EEW ~ 485) in 569 g Toluol und 534 g Isobutanol gelöst. Bei einer Temperatur von 55°C wurden 135 g Methylethanolamin zugesetzt. Nachdem ein Epoxidequivalentgewicht von 835 erreicht war, wurden 656 g des obigen Amin-Vorproduktes und 141 g Toluol zugegeben. Anschließend wurde 2 Stunden nachreagiert. Das Bindemittel hatte einen Festgehalt von 70 % und eine Viskosität von 6200 mPas (gemessen bei 23°C als 40%ige Lösung in Propylenglykolphenylether. Die Aminzahl betrug 91 mg/g.

Bindemittel 4

Eine Mischung aus dem Diglycidylether, dem Bisphenol A-Ethylenoxid-Addukt, Bisphenol A und Methylisobutylketon wurden im angegebenen Gewichtsverhältnis zusammen unter Stickstoff auf 140°C erhitzt. Die entsprechende Menge Benzyldimethylamin wurde in 2 Anteilen zugesetzt, wobei eine exotherme Reaktion stattfand, wodurch die Reaktionstemperatur auf 180°C anstieg. Dabei wurde Wasser azeotrop abdestilliert. Nach beendeter Wasserabscheidung wurde die Reaktionstemperatur 2 Stunden auf 140°C gehalten. Anschließend wurden Diethylentriaminmethylisobutyldiketimin als 75%ige Lösung in Methylisobutylketon sowie N-Methylethanolamin innerhalb von 30 Minuten zugegeben. Nachdem 1 Stunde bei 125 bis 130°C nachreagiert worden war, wurde der Propylenglykolphenylether im entsprechenden Gewichtsverhältnis eingerührt. Es wurde ein Harz mit einem Festgehalt von 93,2 % erhalten.

Bindemittel 5

a) Herstellung eines Amin-Vorproduktes

Ein Gemisch aus 5150 g Diethylentriamin, 7250 g Dimerfettsäure, 1400 g Leinölfettsäure und 1473 g Xylol wurden langsam auf 150 bis 175°C erhitzt, wobei das entstehende Reaktionswasser (539 g) abdestilliert wurde. Das entstandene Vorprodukt hatte bei einem Festgehalt von 90 % eine Aminzahl von 464 mg/g und eine Säurezahl < 2 mg/g.

b) Herstellung des Bindemittels

In einem zweiten Rührgefäß wurden 11280 g des Diglycidylethers auf Basis Bisphenol A und Epichlorhydrin zusammen mit 3078 g Bisphenol A und 756 g Propylenglykolphenylether auf 100°C erhitzt. Nach Zugabe von 4,3 g Triphenylphosphin wurde auf 130°C erhitzt, bis ein Epoxidequivalentgewicht von 435 erreicht war. Man kühlte auf

100°C ab und setzte 4858 g Isobutanol und 540 g Butylglykol zu. Anschließend wurde die Reaktionsmischung auf 55°C abgekühlt und bei dieser Temperatur, unter guter Außenkühlung. 1019 g Methylethanolamin zugesetzt. Nachdem ein Epoxidequivalentgewicht von 750 erreicht war, wurden 4389 g des Amin-Vorproduktes sowie ein Gemisch aus 1521 g Isobutanol und 169 g Butylglykol zugesetzt. Anschließend wurde 2 Stunden nachreagiert. Das Bindemittel hatte einen Festgehalt von 70 % und eine Viskosität von 4800 mPas (gemessen bei 23°C als 40%ige Lösung in Propylenglykolphenylether). Die Aminzahl betrug 145 mg/g.

Herstellung der Komponenten (B)

Vernetzer B1

In einem Rührkolben wurden 576 g Polyoxybutylenpolyisocyanat mit einer mittleren NCO-Funktionalität von 2 in 115 g Diethylenglycoldimethylether gelöst und auf 50°C erwärmt. Zu der Isocyanatlösung wurde eine Lösung von 228 g Bisphenol A in 68 g Toluol derart zugetropft, daß die Reaktionstemperatur 60°C nicht überstieg. Nach beendeter Zugabe wurde solange bei 50 bis 60°C gerührt, bis der NCO-Wert der Lösung auf 0,0335 abgesunken war. Anschließend wurden 78.8 g Dipropylamin bei 60°C zugetropft und solange weitergerührt bis der NCO-Wert auf 0 abgesunken war. Die so hergestellte Vernetzerlösung hatte einen Festgehalt von 83 % und eine Viskosität von 3800 mPas bei 25°C.

Vernetzer B2

a) Herstellung des Verkappungsmittels
1504 g des Diglycidylethers wurden mit 2192 g Bisphenol A und 1,25 g Triphenylphosphin 2 Stunden auf 150 bis 160°C erhitzt und anschließend mit 2087 g Methylisobutylketon verdünnt.

b) Herstellung des Vernetzers
7162 g des Polyoxypropylenpolyisocyanates mit einer mittleren NCO-Funktionalität von 2 wurden in 1432 g Diethylenglykoldimethylether gelöst und auf 50°C erwärmt. Die Polyollösung wurde so zugetropft, daß die Reaktionstemperatur 65°C nicht überstieg. Nach beendeter Zugabe wurde solange bei 50 bis 60°C gerührt, bis der NCO-Wert der Lösung auf 0,0155 abgesunken war. Anschließend wurden 240 g Dimethylethanolamin bei 60°C zugegeben und bei einer Temperatur zwischen 60 und 75°C solange weitergerührt, bis der NCO-Wert auf 0 abgesunken war. Die so dargestellte Vernetzerlösung hatte einen Feststoffgehalt von 75,5 % und eine Viskosität von 2800 mPas bei 25°C.

Vernetzer B3

748,8 g Polyoxyethylenpolyisocyanat mit einer mittleren NCO-Funktionalität von 2 wurden in 150 g Xylol gelöst und auf 50°C erwärmt. Eine Lösung von 45.6 g Bisphenol A in 20 g Xylol wurden so zugetropft, daß die Reaktionstemperatur 65°C nicht überstieg. Nach beendeter Zugabe wurde solange bei 50 bis 60°C weitergerührt bis der NCO-Wert der Lösung auf 0,028 abgesunken war. Anschließend wurden 18,7 g Diisobutylamin zugegeben und solange bei einer Temperatur zwischen 60 und 75°C weitergerührt bis der NCO-Wert auf 0 abgesunken war. Die so dargestellte Vernetzerlösung hatte einen Feststoffgehalt von 80 % und eine Viskosität von 3200 mPas bei 25°C.

Vernetzer B4

13640 g des Polyoxybutylenpolyisocyanates der mittleren NCO-Funktionalität von 2 wurden in 2540 g Methylisobutylketon gelöst und auf 30°C erwärmt. Innerhalb von 3 Stunden wurden 1740 g Methylisobutylketoxim unter Kühlung derart zugetropft, daß die Reaktionstemperatur 55°C nicht überstieg. Anschließend wurden 200 g Methylisobutylketon auf einmal zugegeben und 30 Minuten bei 45°C gerührt. Danach wurden 892,5 g Trimethylolpropan in drei gleichen Teilen zugegeben, wobei die Reaktionstemperatur bei der Zugabe des ersten Teils zwischen 40 und 45 gehalten wurde. Es wurde 30 Minuten bei 40°C nachgerührt bevor der zweite Teil derart zugegeben wurde, daß die Reaktionstemperatur zwischen 47 und 50°C lag. Bei der Zugabe des dritten Anteils wurde nicht mehr gekühlt und die Reaktionstemperatur stieg auf 57 bis 58°C an. Nach der Zugabe von 3,65 g Dibutylzinnlaurat als Katalysator stieg die Reaktionstemperatur auf 95°C. Es wurde solange bei 70 bis 80°C weitergerührt, bis der NCO auf 0 abgesunken war. Die so hergestellte Vernetzerlösung hatte einen Festgehalt von 85 % und eine Viskosität von 2800 mPas bei 25°C.

Vernetzer B5

2180 g des Polyoxypropylenpolyisocyantes einer mittleren NCO-Funktionalität von 2 wurde in 360 g Methylisobutylketon gelöst und auf 45°C erwärmt. Eine Lösung von 135 g 2-Ethylhexanol in 120 g Methylisobutylketon wurde so langsam zugegeben, daß die Reaktionstemperatur 60°C nicht überstieg. Nach beendeter Zugabe wurde 30 Minuten bei 50°C nachgerührt. Anschließend wurde eine Lösung von 114 g Bisphenol A in 65 g Butylglycol zugesetzt, wobei die Reaktionstemperatur bis auf 75 bis 78°C anstieg. Man rührte bei 50 bis 60°C solange weiter, bis der NCO-Wert auf 0 abgesunken war. Die vernetzerlösung hatte einen Feststoffgehalt von 81,5 % und eine viskosität von 2500 mPas bei 25°C.

Vernetzer B6

a) Herstellung des Verkappungsmittels siehe Verkappungsmittel für Vernetzer B2
b) Herstellung des Vernetzers

9520 g Polyoxyethylenpolyisocyanat einer mittleren NCO-Funktionalität von 2 wurden in 1350 g Toluol gelöst und so mit einer Mischung aus 722 g Dimethylaminopropanol und 322 g Ethanol umgesetzt, daß die Reaktionstemperatur 50°C betrug. Anschliepend wurde diese Reaktionslösung innerhalb von 90 Minuten zu der Lösung des Polyols derart zugetropft, daß die Reaktionstemperatur 90°C nicht überstieg. Danach wurden 1551 g Dibutylamin und 361 g Paraformaldehyd zugegeben und die Reaktionsmischung 6 Stunden bei 90 bis 95°C gerührt. Anschliepend wurde das entstandene Reaktionswasser (216 g) im Vakuum abdestilliert. Die so hergestellte Vernetzerlösung hatte einen Feststoffgehalt von 84 % und eine Viskosität von 3800 mPas bei 25°C

Herstellung der Komponente (C)

Vernetzer C1

Zu 174 g eines 80/20-Isomerengemisches von 2,4- und 2,6-Toluylendiisocyanat in 54 g Methylisobutylketon wurden unter Stickstoffatmosphäre 118 g Butylglykol so zugegeben, daß die Reaktionstemperatur 100°C nicht überschritt. Nach beendeter Zugabe wurde 30 Minuten bei 90 bis 100°C nachreagiert. Anschliepend wurden 45,7 g Trimethylolpropan in 3 Anteilen zugesetzt, wobei die Reaktionstemperatur anstieg. Man reagierte solange nach bis der Isocyanatwert auf 0 abgesunken war. Danach verdünnte man mit 30 g Methylisobutylketon und erhielt eine vernetzerlösung mit einem Feststoffgehalt von 80 %.

Vernetzer C2

5042 g trimerisiertes Hexamethylendiisocyanat wurden in 3823 g Methylisobutylketon gelöst. Unter Kühlen wurden bei 70°C 3881 g Dibutylamin zugetropft. Es wurde so lange nachgerührt, bis der Isocyanatwert auf etwa 0 abgesunken war. Das Produkt hatte einen Festgehalt von 70 %.

Vernetzer C3

444,4 g Isophorondiisocyanat wurden in 111,1 g Toluol gelöst und mit 0,44 g Dibutylzinnlaurat versetzt. Anschießend wurde auf 60°C erwärmt, und innerhalb einer Stunde wurde eine Mischung aus 91,2 g Bisphenol A, 53,6 g Trimethylolpropan, 48,3 g Methylisobutylketon und 48,3 g Toluol zugetropft. Nach weiteren zwei Stunden betrug der Isocyanatwert 10,5 %. Es wurden 258 g Dibutylamin so zugetropft, daß die Reaktionstemperatur 80°C nicht überschritt. Nachdem die Reaktion beendet war, wurde mit 155,2 g Toluol auf einen Festgehalt von 70 % verdünnt.

Herstellung der Kunstharzdispersionen

Kunstharzdispersion 1

1145 g des Bindemittels 1 wurden mit 310,9 g Essigsäure innig vermischt. Die Mischung wurde langsam mit 1743 g VE[5])-Wasser versetzt. Anschließend wurden die flüchtigen Lösungsmittel bei 40°C im Vakuum durch azeotrope Destillation entfernt. Dann wurde die Dispersion mit VE-Wasser auf einen Festgehalt von 34 % verdünnt.

Kunstharzdispersion 2

1100 g des selbstvernetzenden Bindemittels 2 wurden mit 997 g des Vernetzers B2 und 65,3 g Essigsäure innig vermischt und anschließend langsam mit 1830 g VE-Wasser versetzt. Die flüchtigen Lösungsmittel wurden bei 40°C durch azeotrope Destillation entfernt. Dann wurde die Dispersion mit VE-Wasser auf 37,5 % Festgehalt verdünnt.

Kunstharzdispersionen 3 bis 9

Allgemeine Arbeitsvorschrift

Die der Tabelle 1 zu entnehmenden Mengen an Bindemittel, Vernetzer B und Vernetzer C wurden mit 16 g Essigsäure innig vermischt. Anschließend wurde die Mischung langsam mit 3121 g Wasser versetzt und das flüchtige Lösungsmittel im Vakuum bei 40°C durch azeotrope Destillation entfernt. Die so erhaltenen Dispersionen hatten einen Festgehalt von 24,5 %.

Tabelle 1

| Kunstharzdispersion Nr. | Bindemittel Nr./[g] | Vernetzer Nr./[g] | Vernetzer Nr./[g] |
|---|---|---|---|
| 3 | 3/511 | B3/391 | C2/298 |
| 4 | 4/420,8 | B4/160,2 | C3/194,5 |
| 5 | 5/420,8 | B5/167,2 | C3/194,5 |
| 6 | 4/420,8 | B6/162,2 | C3/194,5 |
| 7 | 5/429,6 | B4/160,2 | C3/194,5 |
| 8 | 5/429,6 | B5/167,2 | C3/194,5 |
| 9 | 5/429,6 | B6/162,2 | C3/194,5 |

Vergleichskunstharz

(A): Bindemittel 4
(C): Vernetzer C2

Vergleichskunstharzdispersion

43 % Bindemittel 4 und 20 % Vernetzer C2.

Komponente (D)

Pigmentzubereitung

640 g eines Diglycidylethers auf Basis Bisphenol A und Epichlorhydrin mit einem Epoxidequivalentgewicht von 485 und 160 g eines Diglycidylethers auf Basis Bisphenol A und Epichlorhydrin mit einem Epoxidequivalentgewicht von 188 wurden bei 100°C gemischt. In einem zweiten Gefäß wurden 452 g Hexamethylendiamin vorgelegt, auf 100°C erhitzt und 720 g der obigen Epoxidharzmischung innerhalb einer Stunde zugegeben, wobei leicht gekühlt werden mußte, um die Temperatur bei 100°C zu halten. Nach weiteren 30 Minuten wurde unter vermindertem Druck und Temperaturerhöhung das überschüssige Hexamethylendiamin abgezogen, wobei gegen Ende der Destillation eine Temperatur von 205°C und ein Druck von 30 mbar erreicht wurden. Anschließend setzte man 57,6 g Stearinsäure, 172,7 g dimere Fettsäure und 115 g Xylol zu. Dann wurde innerhalb von 90 Minuten das gebildete Reaktionswasser bei 175 bis 180°C azeotrop abdestilliert. Anschliepend wurde mit 58 g Butylglykol und 322 g Isobutanol verdünnt. Das Produkt hatte einen Festgehalt von 70 % und eine Viskosität, gemessen mit einem Platte-Kegel-Viskosimeter bei 75°C von 2240 mPas.

110 g des so erhaltenen Harzes mit oberflächenaktiven Eigenschaften wurden in einer Kugelmühle mit 36 g Ethylenglykolmonobutylether, 3 g Essigsäure, 170 g Titandioxid, 18 g Bleisilikat, 4,5 g Ruß und 170 g Wasser bis zu einer Kornfeinheit von < 7 µm vermahlen.

Elektrotauchlackierbäder

Zu den erfindungsgemäßen Kunstharzdispersionen 1 bis 9 sowie der Vergleichsdispersion wurde die Pigmentzubereitung jeweils in einer solchen Menge hinzugegeben, daß die Gewichtsverhältnisse der Komponenten (A) (Bindemittel) zur Komponente (D) (Pigmentzubereitung) jeweils 2:1 betrugen. Der Badfestkörper wurde mit Wasser jeweils auf 20 % eingestellt, wobei Badvolumina von jeweils 5 l erreicht wurden. Die Elektrotauchlackierbäder wurden 7 Tage bei 30°C gerührt. An kathodisch geschalteten 190 x 150 mm großen Probeblechen aus zink-phosphatiertem Stahlblech wurden bei einer Spannung von 150 bis 500 V innerhalb von 2 Minuten bei einer Badtemperatur von 27°C Kunstharzfilme einer Dicke von 22 bis 24 µm abgeschieden. Anschließend wurden die Kunstharzfilme binnen 20 Minuten bei

165°C eingebrannt.

Die Zusammensetzungn der Bäder und die Prüfergebnisse sind in Tabelle 2 aufgelistet.

Tabelle 2

| ETL-Bad Nr. | Komponenten (A) Bindemittel Nr./Gew.-% | (B) Vernetzer Nr./Gew.-% | (C) Vernetzer Nr./Gew.-% | (D) Pigmentzu. Gew.-% | Prüfergebnisse ET [mm] | RI [in * pd] | SST [mm] | KWT [mm] |
|---|---|---|---|---|---|---|---|---|
| erfindungsgemäß | | | | | | | | |
| 1 | 1/43 | B1/12 | C1/8 | 37 | 7,9 | 120 | 1,13 | 0,41 |
| 2 | 2/43 | B2/20 | - | 37 | 8,2 | 140 | 1,76 | 0,63 |
| 3 | 3/43 | B3/5 | C2/15 | 37 | 7,3 | 80 | 2,49 | 0,64 |
| 4 | 4/43 | B4/10 | C3/10 | 37 | 7,5 | 160 | 1,14 | 0,57 |
| 5 | 4/43 | B5/10 | C3/10 | 37 | 8,9 | >160 | 2,05 | 0,62 |
| 6 | 4/43 | B6/10 | C3/10 | 37 | 6,2 | 80 | 0,79 | 0,43 |
| 7 | 5/43 | B4/10 | C3/10 | 37 | 6,9 | 120 | 1,05 | 0,55 |
| 8 | 5/43 | B5/10 | C3/10 | 37 | 7,6 | 160 | 1,44 | 0,78 |
| 9 | 5/43 | B6/10 | C3/10 | 37 | 7,1 | 140 | 0,51 | 0,41 |
| Vergleich | | | | | | | | |
| 1V | VK/43 | - | C2/20 | 37 | 3,8 | < 10 | 2,39 | 1,32 |

ET: Ericksentiefung

RI: Reverse Impact, Schlagtiefung; Bestimmung mit einem mandrel impact tester der Fa. Gardner nach ASTM D 2794

SST: 480 Stunden Salzsprühtest auf blankem Blech, Unterwanderung in mm nach DIN 50 021

KWT: Klimawechseltest, 10 Zyklen Unterwanderung in mm, nach VDA 621-415

## Patentansprüche

1. Wäßrige Elektrotauchlackierbäder enthaltend

   A) ein vernetzbares Bindemittel aus der Gruppe der Polymerisations-, Polyadditions- oder Polykondensationsprodukte mit reaktionsfähigen Zentren in Form von Hydroxy-, Thio-, primären oder sekundären Aminogruppen und

   B) einen Vernetzer auf der Basis mindestens eines Polyoxyalkylenpolyisocyanates und

   C) einen von (B) verschiedenen Vernetzer, der auch mit dem Bindemittel (A) verknüpft sein kann, auf der Basis

   $\gamma_1$) eines von (B) verschiedenen mehrwertigen Isocyanates oder
   $\gamma_2$) eines Transamidierungsvernetzers oder
   $\gamma_3$) eines Transesterifizierungsvernetzers oder
   $\gamma_4$) einer Mannichbase oder

   einer Mischung zweier oder mehrerer Vernetzer ($\gamma_1$) bis ($\gamma_4$).

2. Wäßrige Elektrotauchlackierbäder nach Anspruch 1, dadurch gekennzeichnet, daß die Komponente A)

   $a_1$) ein Polyester oder
   $a_2$) ein Alkydharz oder
   $a_3$) ein Polyether oder
   $a_4$) ein Polyacrylat oder
   $a_5$) ein Polyurethan oder
   $a_6$) ein Epoxidharz oder

   eine Mischung zweier oder mehrerer Bindemittel ($a_1$) bis ($a_6$) ist.

3. Wäßrige Elektrotauchlackierbäder nach Anspruch 1, dadurch gekennzeichnet, daß die Komponente A) ein mit einem Amin oder einer Mischung aus verschiedenen Aminen umgesetztes Epoxidharz ist.

4. Wäßrige Elektrotauchlackierbäder nach den Ansprüchen 1 bis 3, dadurch gekennzeichnet, daß die Komponente B) ein Vernetzer auf der Basis mindestens eines Polyoxyalkylenpolyisocyanates aus der Gruppe

   $b_1$) Polyoxyethylenpolyisocyanat
   $b_2$) Polyoxypropylenpolyisocyanat und
   $b_3$) Polyoxybutylenpolyisocyanat

   ist.

5. Mittels kathodischer Elektrotauchlackierung beschichteter Gegenstand, erhältlich unter Verwendung der Elektrotauchlackierbäder nach den Ansprüchen 1 bis 4.

## Claims

1. Aqueous electrocoating baths containing

   A) a crosslinkable binder selected from the group consisting of the polymers, polyadducts or polycondensates having reactive centres in the form of hydroxyl, thio or primary or secondary amino groups,
   B) a crosslinking agent based on at least one polyoxyalkylene polyisocyanate and
   C) a crosslinking agent which differs from (B), can also be linked to the binder (A) and is based on

   $\gamma_1$) a polyfunctional isocyanate which differs from (B) or
   $\gamma_2$) a transamidation crosslinking agent or
   $\gamma_3$) a transesterification crosslinking agents or

$\gamma_4$) a Mannich base or

a mixture of two or more crosslinking agent ($\gamma_1$) to ($\gamma_4$).

**2.** Aqueous electrocoating baths according to Claim 1, characterized in that component A) is

$a_1$) a polyester or
$a_2$) an alkyd resin or
$a_3$) a polyether or
$a_4$) a polyacrylate or
$a_5$) a polyurethane or
$a_6$) an epoxy resin or

a mixture of two or more binders ($a_1$) to ($a_6$).

**3.** Aqueous electrocoating baths according to Claim 1, characterized in that component A) is an epoxy resin reacted with an amine or a mixture of different amines.

**4.** Aqueous electrocoating baths according to Claims 1 to 3, characterized in that component B) is a crosslinking agent based on at least one polyoxyalkylene polyisocyanate selected from the group consisting of

$b_1$) polyoxyethylene polyisocyanate
$b_2$) polyoxypropylene polyisocyanate and
$b_3$) polyoxybutylene polyisocyanate.

**5.** Article coated by cathodic electrocoating and obtainable using the electrocoating baths according to Claims 1 to 4.

**Revendications**

**1.** Bains aqueux de vernissage par électrodéposition contenant

A) un liant réticulable du groupe des produits de polymérisation, de polyaddition, ou de polycondensation, ayant des centres réactifs sous la forme de groupements hydroxy, thio, amino primaires ou secondaires et

B) un agent de réticulation à base d'au moins un polyisocyanate de polyoxyalkylène et

C) un agent de réticulation différent de (B), qui peut aussi être lié au liant (A) à base

$\gamma_1$) d'un de plusieurs isocyanates polyvalents différents de (B) ou
$\gamma_2$) d'un agent de réticulation de transamidation ou
$\gamma_3$) d'un agent de réticulation de transestérification ou
$\gamma_4$) d'une base de Mannich ou

d'un mélange de deux ou de plusieurs agents de réticulation ($\gamma_1$) à ($\gamma_4$).

**2.** Bains aqueux de vernissage par électrodéposition selon la revendication 1, caractérisés en ce que le composant A) est

$a_1$) un polyester ou
$a_2$) une résine alkyde ou
$a_3$) un polyéther ou
$a_4$) un polyacrylate ou
$a_5$) un polyuréthane ou
$a_6$) une résine époxyde ou

un mélange de deux ou de plusieurs liants ($a_1$) à ($a_6$).

**3.** Bains aqueux de vernissage par électrodéposition selon la revendication 1, caractérisés en ce que le composant A) est une résine époxyde ayant réagi avec une amine ou un mélange de diverses amines.

**4.** Bains aqueux de vernissage par électrodéposition selon les revendications 1 à 3, caractérisés en ce que le composant B) est un agent de réticulation à base d'au moins un polyisocyanate de polyoxyalkylène du groupe

$b_1$) polyisocyanate de polyoxyéthylène
$b_2$) polyisocyanate de polyoxypropylène et
$b_3$) polyisocyanate de polyoxybutylène.

**5.** Article revêtu à l'aide d'un vernis d'électrodéposition cathodique, que l'on peut obtenir par utilisation des bains de vernissage par électrodéposition selon les revendication 1 à 4.